Europäisches Patentamt

European Patent Office

Office européen des brevets

(19)

(11) **EP 1 589 687 A1**

(12) **DEMANDE DE BREVET EUROPEEN**

(43) Date de publication:
26.10.2005 Bulletin 2005/43

(51) Int Cl.⁷: **H04L 1/06**, H04L 25/02

(21) Numéro de dépôt: 04364035.8

(22) Date de dépôt: **23.04.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(71) Demandeur: **FRANCE TELECOM**
**75015 Paris (FR)**

(72) Inventeurs:
• **Legouable, Rodolphe**
**35510 Cesson Sévigné (FR)**

• **Le Nir, Vincent**
**35000 Rennes (FR)**
• **Helard, Maryline**
**35700 Rennes (FR)**
• **Auffray, Jean-Michel**
**35510 Cesson Sévigné (FR)**
• **Helard, Jean-Francois**
**35700 Rennes (FR)**

(74) Mandataire: **Bioret, Ludovic**
**Cabinet Vidon**
**16 B, rue Jouanet - B.P. 90333**
**35703 Rennes Cedex 07 (FR)**

(54) **Procédé d'émission d'un signal dans un système multi-antennes, signal et procédé d'estimation de canal correspondants**

(57) L'invention concerne un procédé d'émission d'un signal numérique à l'aide de *n* antennes d'émission, *n* étant strictement supérieur à 2, selon lequel on associe, à un vecteur de données source, *n* vecteurs à émettre respectivement par chacune des antennes d'émission, à l'aide d'une matrice de codage *M* de rendement égal à 1, mettant en oeuvre des symboles de référence, connus d'au moins un récepteur et permettant à ce dernier d'estimer au moins deux canaux de transmission correspondant respectivement à chacune desdites antennes d'émission.

Selon l'invention, les symboles de référence subissent une transformation mathématique par ladite matrice de codage *M* avant leur émission.

Fig. 1A

**Description**

**1. Domaine de l'invention**

Le domaine de l'invention est celui des communications numériques par voie hertzienne. Plus précisément, l'invention concerne l'émission et la réception, et notamment l'estimation des canaux de transmission dans un système multi-antennes de type MIMO (« Multiple Input Multiple Output » pour « Entrées Multiples Sorties Multiples ») ou MISO (« Multiple Input Single Output » pour « Entrées Multiples Sortie Unique»), à partir de la transmission de signaux soumis à un codage espace-temps et/ou espace-fréquence.

Plus précisément encore, l'invention s'applique aux systèmes multi-antennes mettant en oeuvre plusieurs, et notamment plus de deux antennes d'émission. Les signaux comprennent des symboles de référence, connus d'au moins un récepteur et permettant à ce dernier d'estimer les canaux de transmission correspondant à chacune des antennes d'émission.

Un exemple d'application de l'invention est le domaine des radiocommunications, notamment pour les systèmes de troisième, quatrième génération et suivantes.

L'invention peut s'appliquer aux communications sur voie montante (d'un terminal vers une station de base), ainsi qu'aux communications sur voie descendante (d'une station de base vers un terminal).

**2. Solutions de l'art antérieur**

On connaît déjà plusieurs techniques d'estimation des canaux de transmission dans un système multi-antennes comprenant plusieurs antennes d'émission.

La plupart de ces techniques d'estimation se limite à l'application d'un codage espace-temps ou espace-fréquence dans des systèmes multiporteuses de type OFDM.

Ainsi, les premiers systèmes proposés utilisaient tous des codes espace-temps en blocs orthogonaux.

Alamouti, dans "A Simple Transmit Diversity Technique for Wireless Communications", IEEE Journal on Selected Areas in Communications, pp. 311-335, vol. 6, 1998, a présenté le premier système utilisant un code espace-temps en blocs orthogonal à rendement de 1 (où le rendement est défini comme le rapport entre le nombre N de symboles émis et le nombre L de temps symboles pendant lequel ils sont émis), pour deux antennes d'émission.

Un inconvénient majeur des codes espace-temps orthogonaux d'Alamouti est qu'ils sont limités aux systèmes à deux antennes d'émission, et qu'il n'est pas possible de les généraliser directement à un système à plus de deux antennes d'émission, tout en conservant un rendement unitaire.

Tarokh et al. ("Space-time Block Codes from Orthogonal Designs", IEEE Transactions on Information Theory, 1999, 45, (5), pp. 1456-1467) ont ensuite généralisé les codes espace-temps en blocs orthogonaux aux systèmes comprenant trois ou quatre antennes d'émission. Cependant, les rendements R=N/L obtenus n'étaient que de 1/2 ou 3/4.

Un inconvénient des codes espace-temps orthogonaux de Tarokh est donc que, bien qu'ils soient adaptés à des systèmes mettant en oeuvre un nombre supérieur d'antennes d'émission (trois ou quatre antennes), ils présentent un rendement inférieur à 1.

Barhumi et al. ont ensuite proposé dans "Pilot Tone-based Channel estimation for OFDM Systemes with Transmitter Diversity in Mobile Wireless Channels" une technique d'estimation de canal pour des systèmes OFDM multi-antennes (SISO-OFDM ou MIMO-OFDM), reposant sur une méthode d'estimation de canal OFDM classique, mettant notamment en oeuvre une extinction de certaines porteuses. Cependant, un inconvénient de cette technique d'estimation dans un système MIMO est que l'insertion de symboles de référence engendre en général une perte importante en efficacité spectrale, dès lors que pour chaque antenne d'émission, un symbole de référence est émis sur une porteuse de référence à un instant donné tandis que sur 1'(es) autre(s) porteuses, aucune donnée n'est émise afin de ne pas venir perturber l'estimation du canal de transmission.

D'autres travaux ont ensuite été menés par Fragouli et al. dans "Training Based Channel Estimation for Multiple-Antenna Broadband Transmissions" concernant les séquences d'apprentissage pouvant être utilisées pour l'estimation de canal pour des systèmes multi-antennes.

Par la suite, Stirling-Gallacher et al.("Improving performance of coherent coded OFDM systems using space time transmit diversity", Electronics Letterers , vol. 37 N, Mars 2001, "Practical Pilot Patterns coherent coded OFDM systems using space time transmit diversity", European Wireless 2002 conference, 25-28 février 2002, Florence) ont envisagé une technique d'estimation de canal pour les systèmes MIMO-OFDM, se limitant à des systèmes à 2 antennes d'émission utilisant des codes espace/temps orthogonaux de type Alamouti ou Tarokh.

Un inconvénient de cette technique d'estimation est que le nombre d'antennes d'émission du système de transmission est limité par l'utilisation de codes espace-temps en blocs orthogonaux connus.

Ainsi, selon les techniques de l'art antérieur, il n'existe pas de codes orthogonaux complexes à rendement unitaire pour les systèmes à plus de deux antennes d'émission, ce qui diminue l'efficacité spectrale.

### 3. Objectifs de l'invention

L'invention a notamment pour objectif de pallier ces inconvénients de l'art antérieur.

Plus précisément, un objectif de l'invention est de fournir une technique d'estimation d'au moins un canal de transmission dans un système multi-antennes mettant en oeuvre plus de deux antennes d'émission.

Un autre objectif de l'invention est de proposer une telle technique qui soit plus efficace et performante que les techniques connues, tout en présentant une complexité réduite.

Encore un autre objectif de l'invention est de fournir une technique d'émission d'un signal comprenant des symboles de référence mettant en oeuvre une matrice de codage espace-temps et/ou espace-fréquence. Notamment, un objectif de l'invention est de fournir une matrice de codage de rendement unitaire.

L'invention a encore pour objectif de fournir une telle technique qui soit adaptée aux systèmes multi-antennes de type MISO ou MIMO pour des modulations de type monoporteuse ou multiporteuses, combinées aux différentes techniques d'accès multiple (*CDMA*, de l'anglais « Code Division Multiplex Access » pour « accès multiple à répartition par code », *FDMA* pour « accès multiple fréquentiel », ou *TDMA* pour « accès multiple temporel »).

Un autre objectif de l'invention est de proposer une telle technique qui permette d'augmenter la diversité spatiale des systèmes tout en minimisant l'interférence entre les différents canaux de transmission et en limitant la perte d'efficacité spectrale.

En d'autres termes, l'invention a pour objectif de fournir une telle technique, qui puisse être mise en oeuvre de façon pratique et peu coûteuse dans un système mettant en oeuvre un nombre élevé d'antennes.

### 4. Caractéristiques essentielles de l'invention

Ces objectifs, ainsi que d'autres qui apparaîtront par la suite, sont atteints à l'aide d'un procédé d'émission d'un signal numérique à l'aide de $n$ antennes d'émission, $n$ étant strictement supérieur à 2, selon lequel on associe, à un vecteur de données source, $n$ vecteurs à émettre respectivement par chacune desdites antennes d'émission, à l'aide d'une matrice de codage $M$ de rendement égal à 1, mettant en oeuvre des symboles de référence, connus d'au moins un récepteur et permettant à ce dernier d'estimer au moins deux canaux de transmission correspondant respectivement à chacune desdites antennes d'émission.

Selon l'invention, lesdits symboles de référence d'un tel procédé d'émission subissent une transformation mathématique par ladite matrice de codage $M$ avant leur émission.

Ainsi, l'invention repose sur une approche tout à fait nouvelle et inventive de l'émission d'un signal numérique, mettant en oeuvre une matrice de codage dans un système multi-antennes à plus de deux antennes d'émission.

Plus précisément, l'invention propose d'émettre sur les $n$ antennes d'émission les symboles de référence de la matrice de codage $M$ de rendement égal à 1, un vecteur de symboles de référence étant associé à la matrice de codage $M$ par l'intermédiaire d'une fonction de codage.

Une telle matrice de codage $M$ de rendement égal à 1 correspond soit à une matrice non orthogonale, soit à une matrice orthogonale par blocs, le rendement étant défini comme le rapport entre le nombre de symboles émis et le nombre de temps symboles pendant lequel ils sont émis.

Avantageusement, les symboles de référence sont répartis en espace et en temps et/ou en espace et en fréquence.

La matrice de codage met alors en oeuvre un codage espace-temps et/ou espace-fréquence.

Selon un premier mode de réalisation, la matrice de codage comprend au moins deux blocs, chacun des blocs étant orthogonaux.

De manière préférentielle, chacun des blocs de symboles de référence est émis séparément, chacun des blocs étant émis sur certaines antennes d'émission, les autres antennes d'émission étant éteintes.

Ainsi les données émises par un premier ensemble d'antennes ne sont pas perturbées par les données émises par un autre ensemble d'antennes, l'autre ensemble d'antennes n'émettant pas sur les mêmes porteuses au même instant.

Selon un autre mode de réalisation de l'invention, dit troisième mode de réalisation, le procédé d'émission comprend une étape de sélection entre une répartition en fréquence et une répartition en temps.

Notamment, cette étape de sélection peut tenir compte des caractéristiques d'un canal de transmission.

Selon un autre mode de réalisation de l'invention, dit second mode de réalisation, les symboles de référence sont émis sur l'ensemble des antennes d'émission après transformation mathématique par la matrice de codage $M$.

Ainsi la matrice de codage $M$ est une matrice globalement non orthogonale.

Notamment, la matrice de codage $M$ peut être obtenue par un codage de type Jafarkhani, et est de la forme :

$$M = \begin{bmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{bmatrix},$$

où $x_i$ est un symbole de référence et $x_i^*$ un symbole de référence conjugué, avec $i$ un entier relatif, $1 \leq i \leq 4$.

L'invention concerne également un signal numérique formé de $n$ vecteurs émis respectivement à l'aide de $n$ antennes d'émission, $n$ étant strictement supérieur à 2.

Selon l'invention, le signal comprend des symboles de référence codés, obtenus après transformation mathématique de symboles de référence par une matrice de codage $M$ de rendement unitaire, de façon à permettre, dans un récepteur, d'estimer au moins deux canaux de transmission correspondant respectivement à chacune des antennes d'émission.

L'invention concerne encore un procédé d'estimation d'au moins un canal de transmission dans un système multi-antennes mettant en oeuvre $n$ antennes d'émission, où $n$ est strictement supérieur à 2, et au moins une antenne de réception. Selon ce procédé, on associe à un vecteur de données source $n$ vecteurs à émettre respectivement par chacune desdites antennes d'émission, à l'aide d'une matrice de codage $M$, mettant en oeuvre des symboles de référence, connus d'au moins un récepteur et permettant à ce dernier d'estimer au moins deux canaux de transmission correspondant respectivement à chacune des antennes d'émission.

Selon l'invention, un tel procédé d'estimation comprend une étape de réception d'un vecteur de référence reçu, correspondant à un vecteur de référence émis obtenu par la multiplication de symboles de référence par ladite matrice de codage $M$, et modifié par au moins un canal de transmission pour chacune des antennes d'émission. Pour chacune desdites antennes de réception, le vecteur de référence reçu subi une transformation mathématique par une matrice de décodage, inverse de la matrice de codage et tenant compte de l'effet d'un canal de transmission associé à l'antenne de réception, pour fournir une estimation des effets des canaux de transmission sur les symboles de référence.

Ainsi, l'invention repose sur une approche tout à fait nouvelle et inventive de l'estimation de canaux dans un système multi-antennes à plus de deux antennes d'émission. On notera que cette approche est également nouvelle dans un système à deux antennes d'émission.

En effet, l'estimation des différents canaux de transmission est mise en oeuvre à partir de symboles de référence connus d'au moins un récepteur, un vecteur de symboles de référence étant associé à la matrice de codage $M$ par l'intermédiaire d'une fonction de codage.

Connaissant le vecteur de symboles de référence et la matrice de codage $M$ utilisées, on peut estimer les différents canaux de transmission, à partir de l'inverse de la matrice de codage, correspondant à la matrice de décodage.

Ainsi, à partir des symboles de référence et de la technique de codage utilisée, un dispositif de réception peut mettre en oeuvre des techniques de décodage, de filtrage ou d'égalisation, et une recombinaison des signaux issus des diverses antennes, afin d'estimer les différents canaux de transmission.

Avantageusement, la matrice de décodage est une matrice inverse intégrant une égalisation au sens du critère MMSE (en anglais « Minimum Mean Squared Error » pour « minimisation de l'erreur quadratique moyenne ») ou ZF (en anglais « Zero Forcing » pour « forçage à zéro »).

Notamment, le critère mis en oeuvre peut être le critère MMSE. La matrice de décodage est alors formée des éléments :

$$\hat{h} = \frac{M^H}{M^H M + \frac{I}{\gamma}} \, r,$$

Le critère mis en oeuvre peut également être le critère ZF. La matrice de décodage est alors formée des éléments :

$$\hat{h} = \frac{M^H}{M^H M} \, r,$$

avec :

- *r* le vecteur de référence reçu ;
- *M* la matrice de codage ;
- *I* la matrice unité ;
- γ le rapport signal à bruit ;
- $^H$ le transposé conjugué.

De manière préférentielle, le procédé d'estimation comprend une étape d'interpolation, délivrant une estimation des canaux de transmission pour chacune des données utiles, à partir de l'estimation des symboles de référence.

Notamment, l'étape d'interpolation est remarquable en ce qu'elle met en oeuvre une interpolation temporelle et/ou une interpolation fréquentielle.

Cette étape d'interpolation peut appartenir au groupe comprenant :

- les interpolations linéaires ;
- les interpolations de Wiener.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1A et 1B présentent un système d'estimation de canaux dans un système multi-antennes à 4 antennes d'émission, avec des symboles répartis dans le domaine fréquentiel (figure 1A) ou temporel (figure 1B) selon un premier mode de réalisation de l'invention ;
- les figures 2A et 2B présentent une répartition particulière des symboles du système d'estimation de canaux des figures 1A et 1B ;
- les figures 3A et 3B illustrent un système d'estimation de canaux dans un système multi-antennes à 4 antennes d'émission, avec des symboles répartis dans le domaine fréquentiel (figure 3A) ou temporel (figure 3B) selon un troisième mode de réalisation de l'invention.

## 6. Description d'un mode de réalisation de l'invention

Le principe général de l'invention repose sur l'association d'une matrice de codage *M* à un vecteur de symboles de référence, connus d'au moins un récepteur, de façon à permettre, dans le récepteur, d'estimer les différents canaux de propagation entre plus de deux antennes d'émission et une antenne de réception.

Cette matrice de codage *M* est soit non orthogonale, soit orthogonale par blocs et présente un rendement égal à 1, le rendement étant défini comme le rapport entre le nombre de symboles émis et le nombre de temps symboles pendant lequel ils sont émis. Les symboles de la matrice de codage *M* sont ensuite répartis en temps et/ou en fréquence sur chacune des antennes d'émission.

A la réception, pour chaque antenne de réception, le signal reçu est multiplié par la matrice inverse (intégrant une technique d'égalisation au sens du critère MMSE ou ZF) de la matrice de codage *M*, en tenant compte éventuellement du bruit introduit par le récepteur.

Le résultat est un vecteur à *n* dimensions qui représente les *n* canaux de transmission entre les *n* antennes d'émission et cette antenne de réception. Ce vecteur à *n* dimensions est ensuite utilisé par le récepteur pour estimer le canal de transmission, notamment en répétant cette opération périodiquement et en réalisant une interpolation temporelle et/ou fréquentielle entre deux symboles de référence estimés lors de cette opération. L'interpolation est par exemple de type linéaire ou de Wiener.

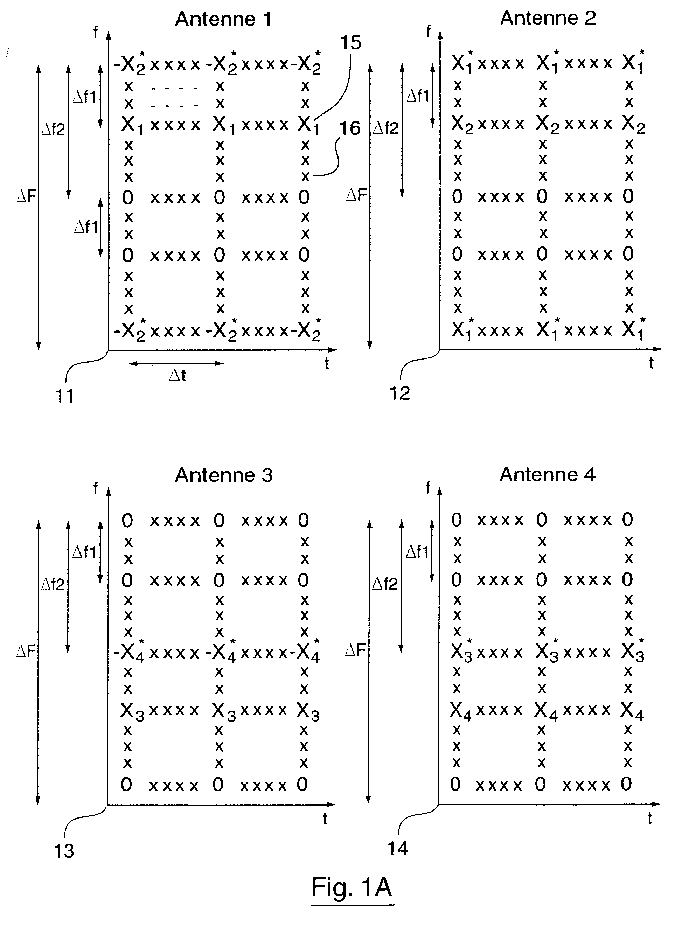

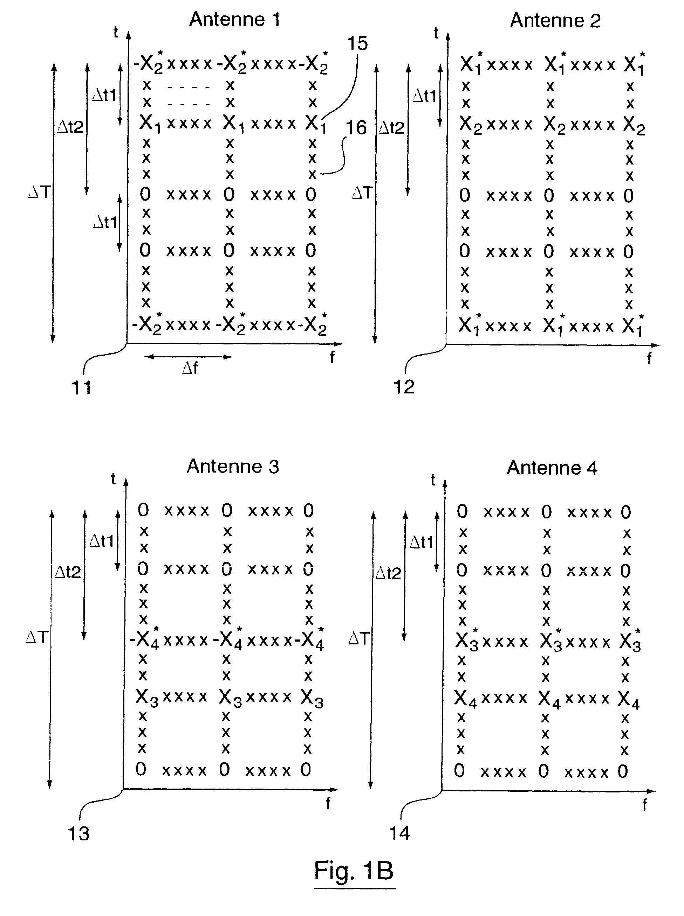

On présente, en relation avec les figures 1A et 1B, un premier mode de réalisation de l'invention, dans lequel on cherche à estimer les canaux de transmission d'un système multi-antennes à 4 antennes d'émission.

Selon ce premier mode de réalisation, la matrice de codage *M* est une matrice par blocs, chacun des blocs comprenant *n* symboles de référence. On applique alors un codage d'Alamouti espace-temps orthogonal sur chaque bloc de la matrice de codage *M*. Chacun des blocs de *n* symboles de référence est alors orthogonal.

L'Homme du Métier étendra facilement cet enseignement au cas où le nombre d'antennes, en émission et/ ou en réception, est plus élevé. On peut ainsi appliquer un codage d'Alamouti sur chacun des blocs d'un système à *n* = 4, 6, 8,... antennes d'émission.

Selon ce mode de réalisation illustré en figures 1A et 1B, on applique le codage d'Alamouti sur les symboles de référence servant à l'estimation du canal, puis on émet ces symboles de référence codés sur un couple d'antennes d'émission, tout en gardant l'autre couple d'antennes éteint.

Ainsi, si on considère le vecteur de symboles de référence $[x_1\ x_2\ x_3\ x_4]$, la matrice de codage $M$ qui lui est associé par l'intermédiaire de la fonction de codage est :

$$M = \begin{bmatrix} x_1 & x_2 & 0 & 0 \\ -x_2^* & x_1^* & 0 & 0 \\ 0 & 0 & x_3 & x_4 \\ 0 & 0 & -x_4^* & x_3^* \end{bmatrix}$$

où $x_i$ est un symbole de référence, $x_i^*$ un symbole de référence conjugué, avec $i$ un entier relatif et $1 \le i \le 4$, et 0 signifie qu'aucun symbole n'est émis sur l'antenne concernée.

Chaque bloc

$$\begin{bmatrix} x_1 & x_2 \\ -x_2^* & x_1^* \end{bmatrix} \text{ et } \begin{bmatrix} x_3 & x_4 \\ -x_4^* & x_3^* \end{bmatrix}$$

de la matrice de codage étant codé selon un code d'Alamouti, on a $M \cdot M^H = I$, avec $I$ la matrice unité, et $^H$ le transposé conjugué.

Les symboles de référence de la matrice de codage $M$ sont ensuite émis après répartition espace-fréquence (figure 1A) ou espace-temps (figure 1B) sur les différentes antennes d'émission, l'axe spatial représentant les colonnes de la matrice $M$ et l'axe fréquentiel (figure 1A) ou temporel (figure 1B) représentant les lignes de la matrice $M$.

Il est bien entendu que d'autres répartitions espace-temps ou espace-fréquence des symboles peuvent être envisagées, ainsi qu'une combinaison des répartitions espace-temps et espace-fréquence.

En fait, chaque bloc de la matrice de codage $M$ est émis indépendamment sur ses antennes respectives, pendant que les autres blocs de la matrice de codage ne sont pas émis. Autrement dit, chaque bloc de symboles de référence est émis séparément, chacun des blocs étant émis sur certaines antennes d'émission tandis que les autres antennes sont éteintes.

On présente ainsi en figure 1A les symboles émis par les 4 antennes 11, 12, 13, 14 d'un système multi-antennes à 4 antennes d'émission, les symboles émis étant répartis dans le domaine fréquentiel (axe des ordonnées), avec $X_i$ un symbole de référence référencé 15, $X_i^*$ un symbole de référence conjugué ($i$ un entier relatif et $1 \le i \le 4$), x un symbole de données, référencé 16, et 0 signifie qu'aucun symbole n'est émis.

Les symboles émis par les 4 antennes 11, 12, 13, 14 sont répartis dans le domaine espace-fréquence (figure 1A) ou espace-temps (figure 1B) en fonction des paramètres $\Delta F$, $\Delta f_1$, $\Delta f_2$ (figure 1A), $\Delta T$, $\Delta t_1$, $\Delta t_2$ (figure 1B), représentant les motifs de répétition des symboles de référence.

Les valeurs choisies pour $\Delta f$, correspondant à l'espacement entre deux porteuses de référence (dans cet exemple $\Delta f = \{\Delta F, \Delta f_1, \Delta f_2\}$), et pour $\Delta t$, correspondant à l'espacement entre deux symboles de référence à des instants connus (dans cet exemple $\Delta t = \{\Delta T, \Delta t_1, \Delta t_2\}$), ne sont pas propres au système proposé mais dépendent de la stationnarité du canal de transmission.

En général, on considère :

- $\Delta F << B_c$, avec $B_c$ la bande de cohérence du canal ;
- $\Delta T << T_c$, avec $T_c$ le temps de cohérence du canal ;
- $\Delta f_1$ vérifie au mieux la stationnarité fréquentielle du canal ;
- $\Delta t_1$ vérifie au mieux la stationnarité temporelle du canal ;
- $\Delta f_2$ et $\Delta t_2$ dépendent d'un compromis entre la perte en efficacité spectrale et les performances du système.

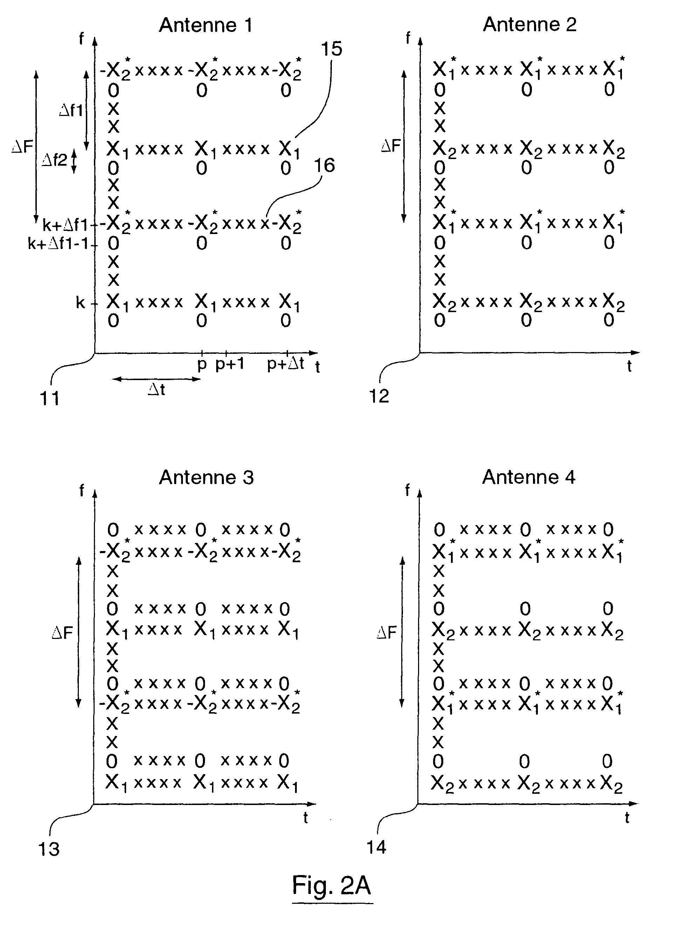

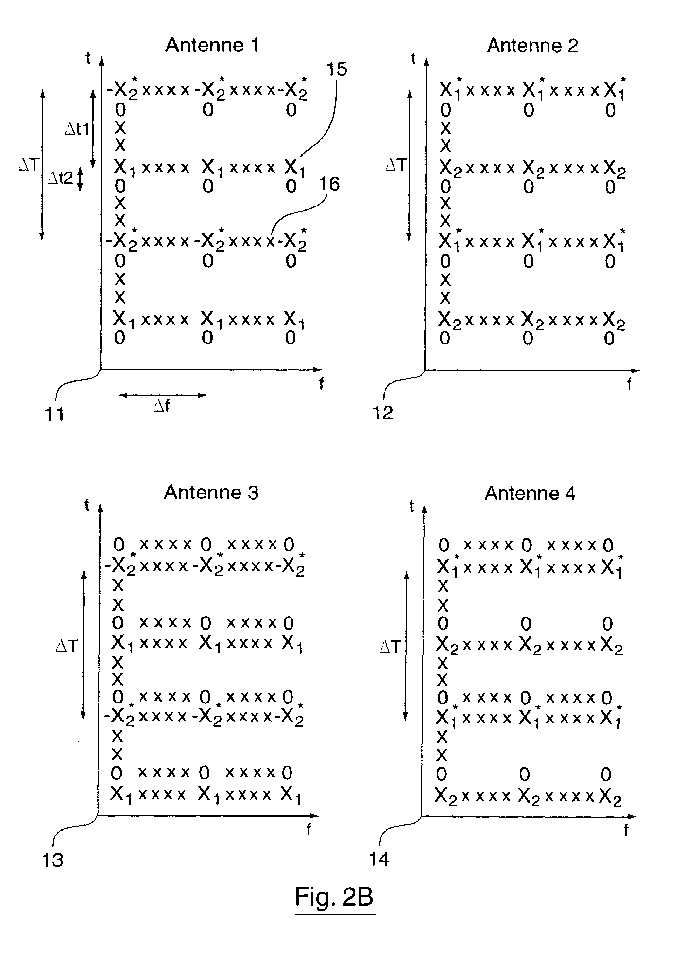

On présente également en figures 2A et 2B un autre exemple de la répartition espace-temps (figure 2A) ou espace-fréquence (figure 2B) des symboles selon ce premier mode de réalisation, en fonction des paramètres $\Delta F$, $\Delta f_1$, $\Delta f_2$ (figure 2A), $\Delta T$, $\Delta t_1$, $\Delta t_2$ (figure 2B).

Selon cet exemple, la valeur des symboles de référence est choisie de sorte que $X_1 = X_3$ et $X_2 = X_4$.

Le vecteur de référence reçu au niveau d'une antenne de réception, modifié par le canal de transmission, peut alors s'écrire sous la forme $r = Xh + n$, où $h$ correspond à une modélisation du canal de transmission et $n$ est un vecteur de bruit blanc gaussien.

On peut également écrire ce vecteur de référence reçu sous forme vectorielle :

$$
\begin{bmatrix} r_1 \\ r_2 \\ r_3 \\ r_4 \end{bmatrix} = \begin{bmatrix} x_1 & x_2 & 0 & 0 \\ -x_2^* & x_1^* & 0 & 0 \\ 0 & 0 & x_3 & x_4 \\ 0 & 0 & -x_4^* & x_3^* \end{bmatrix} \cdot \begin{bmatrix} h_1 \\ h_2 \\ h_3 \\ h_4 \end{bmatrix} + \begin{bmatrix} n_1 \\ n_2 \\ n_3 \\ n_4 \end{bmatrix}
$$

Pour chacune des antennes de réception, on cherche à estimer le canal de transmission $h$ en appliquant au vecteur de référence reçu une transformation mathématique par une matrice de décodage, correspondant à la matrice inverse intégrant une technique d'égalisation au sens du critère MMSE ou ZF de la matrice de codage $M$.

Selon le critère MM**SE,** la matrice de décodage est formée des éléments :

$$
\hat{h} = \frac{M^H}{M^H M + \dfrac{I}{\gamma}}\, r,
$$

avec :

- $r$ ledit vecteur de référence reçu ;
- $M$ ladite matrice de codage ;
- $I$ une matrice unité ;
- $\gamma$ le rapport signal à bruit ;
- $^H$ le transposé conjugué.

Selon le critère ZF, la matrice de décodage est formée des éléments :

$$
\hat{h} = \frac{M^H}{M^H M}\, r,
$$

avec :

- $r$ ledit vecteur de référence reçu ;
- $M$ ladite matrice de codage ;
- $^H$ le transposé conjugué.

Ces deux critères conduisent à des résultats identiques à fort rapport signal à bruit.

Dans le cas d'un critère ZF, on obtient :

$$
\begin{bmatrix} \hat{h}_1 \\ \hat{h}_2 \\ \hat{h}_3 \\ \hat{h}_4 \end{bmatrix} = \begin{bmatrix} \dfrac{1}{a} & 0 & 0 & 0 \\ 0 & \dfrac{1}{a} & 0 & 0 \\ 0 & 0 & \dfrac{1}{b} & 0 \\ 0 & 0 & 0 & \dfrac{1}{b} \end{bmatrix} \begin{bmatrix} a & 0 & 0 & 0 \\ 0 & a & 0 & 0 \\ 0 & 0 & b & 0 \\ 0 & 0 & 0 & b \end{bmatrix} \cdot \begin{bmatrix} h_1 \\ h_2 \\ h_3 \\ h_4 \end{bmatrix} + \begin{bmatrix} \dfrac{1}{a} & 0 & 0 & 0 \\ 0 & \dfrac{1}{a} & 0 & 0 \\ 0 & 0 & \dfrac{1}{b} & 0 \\ 0 & 0 & 0 & \dfrac{1}{b} \end{bmatrix} M^H n
$$

avec

$$a = \sum_{i=1}^{2} \left| x_i \right|^2 \text{ et } b = \sum_{i=3}^{4} \left| x_i \right|^2.$$

On peut ainsi déterminer les coefficients du canal à un instant p sur une porteuse k, à un instant p sur une porteuse $k+\Delta f_1$, ..., comme illustré en figure 2A.

En appliquant une interpolation fréquentielle entre les deux porteuses k et $k+\Delta f_1$ portant les symboles de références, le récepteur peut déterminer les coefficients du canal de propagation aux porteuses k, k+1, k+2, ..., $k+\Delta f_1$-1, $k+\Delta f_1$.

Une interpolation peut également être réalisée dans le domaine temporel, en considérant que les symboles de référence sont émis à l'instant p sur la porteuse k, à l'instant $p+\Delta t$ sur la même porteuse k, .... Le récepteur peut alors déterminer les coefficients du canal de propagation aux instants p, p+1, p+2, ..., $p+\Delta t$-1, $p+\Delta t$ et ainsi de suite.

Le récepteur peut donc réaliser une interpolation temporelle et/ou une interpolation fréquentielle. Cette étape d'interpolation met en oeuvre une technique d'interpolation bien connue de l'Homme du Métier, comme par exemple une interpolation de type linéaire, ou de Wiener.

L'autre couple d'antennes n'émettant pas sur les mêmes porteuses et aux mêmes instants, comme illustré en figures 1A,1B, 2A et 2B, le signal émis par le premier couple d'antennes n'est pas perturbé.

Chaque couple d'antennes émet alors alternativement les symboles de référence répartis sur ses antennes, de sorte à estimer l'ensemble des canaux de transmission du système mutli-antennes.

Selon l'invention, on peut ainsi appliquer des codes espace-temps orthogonaux à des systèmes présentant un plus grand nombre d'antennes d'émission, à l'aide d'une matrice de codage *M* conservant un rendement égal à 1. On peut ainsi appliquer un codage d'Alamouti, de rendement égal à 1, à des systèmes présentant 4, 6, 8, ..., antennes d'émission (alors que selon l'état de l'art, le nombre d'antennes d'émission du système de transmission est limité du fait de l'utilisation de codes espace-temps orthogonaux).

Cependant, bien que cette technique d'estimation de canal présente de meilleures performances en termes d'estimation puisqu'on éteint les autres groupes d'antennes lorsqu'un groupe d'antennes émet, cette technique s'accompagne d'une perte en efficacité spectrale et ne permet pas de profiter de la puissance totale des antennes, certaines porteuses ne portant aucune information à des instants définis.

On présente alors un second mode de réalisation de l'invention, dans lequel les symboles de référence sont émis sur l'ensemble des antennes d'émission après transformation mathématique par la matrice de codage *M*, la matrice de codage *M* étant non orthogonale.

Selon ce second mode de réalisation, on applique un codage espace-temps non orthogonal, de type Jafarkhani, comme présenté dans « A Quasi-Orthogonal Space-Time Block Code » (IEEE Transactions on Communications, Vol. 49, N°1, 2001, pp.1-4), sur les symboles de référence servant à l'estimation du canal.

Ce codage permet notamment d'émettre des signaux présentant une faible interférence.

Ainsi, si on considère le vecteur de symboles de référence $[x_1 \ x_2 \ x_3 \ x_4]$, la matrice de codage *M* qui lui est associé par l'intermédiaire de la fonction de codage est :

$$M = \begin{bmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{bmatrix},$$

où $x_i$ est un symbole de référence, $x_i^*$ un symbole de référence conjugué, avec *i* un entier relatif, $1 \le i \le 4$.

Tous les symboles de référence de la matrice de codage *M* sont ensuite émis après répartition espace/fréquence sur l'ensemble des antennes d'émission, l'axe spatial représentant les colonnes de la matrice *M* et l'axe fréquentiel ou temporel représentant les lignes de la matrice *M*.

Comme décrit précédemment, le vecteur de référence reçu au niveau d'une antenne de réception, modifié par le canal de transmission, peut s'écrire sous la forme $r = Xh + n,$ où *h* correspond à une modélisation du canal de transmission et *n* est un vecteur de bruit blanc gaussien.

On peut également écrire ce vecteur de référence reçu sous forme vectorielle :

$$\begin{bmatrix} r_1 \\ r_2 \\ r_3 \\ r_4 \end{bmatrix} = \begin{bmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{bmatrix} \cdot \begin{bmatrix} h_1 \\ h_2 \\ h_3 \\ h_4 \end{bmatrix} + \begin{bmatrix} n_1 \\ n_2 \\ n_3 \\ n_4 \end{bmatrix}.$$

De nouveau, pour chacune des antennes de réception, on cherche à estimer le canal de transmission $h$ en appliquant au vecteur de référence reçu une transformation mathématique par une matrice de décodage, correspondant à la matrice inverse intégrant une technique d'égalisation au sens du critère MMSE ou ZF de la matrice de codage $M$.

Dans le cas d'un critère MMSE, on obtient :

$$\begin{bmatrix} \hat{h}_1 \\ \hat{h}_2 \\ \hat{h}_3 \\ \hat{h}_4 \end{bmatrix} = \begin{bmatrix} a+\dfrac{1}{\gamma} & 0 & 0 & b \\ 0 & a+\dfrac{1}{\gamma} & -b & 0 \\ 0 & -b & a+\dfrac{1}{\gamma} & 0 \\ b & 0 & 0 & a+\dfrac{1}{\gamma} \end{bmatrix}^{-1} \begin{bmatrix} a & 0 & 0 & b \\ 0 & a & -b & 0 \\ 0 & -b & a & 0 \\ b & 0 & 0 & a \end{bmatrix} \cdot \begin{bmatrix} h_1 \\ h_2 \\ h_3 \\ h_4 \end{bmatrix} + \begin{bmatrix} a+\dfrac{1}{\gamma} & 0 & 0 & b \\ 0 & a+\dfrac{1}{\gamma} & -b & 0 \\ 0 & -b & a+\dfrac{1}{\gamma} & 0 \\ b & 0 & 0 & a+\dfrac{1}{\gamma} \end{bmatrix}^{-1} M^H \cdot n$$

avec

$$a = \sum_{i=1}^{4} |x_i|^2 \text{ et } b = 2\operatorname{Re}(x_1 x_4^* - x_2 x_3^*).$$

On réitère cette opération de manière identique pour chaque antenne de réception, quelque soit le nombre d'antennes. On peut ainsi déterminer les coefficients $h_c$ d'un canal de transmission à une fréquence c ou un instant c défini, et il ne reste qu'à appliquer une interpolation temporelle et/ou fréquentielle au niveau du récepteur entre les estimées de $h_c$ et $h_{c+k}$ (avec k = Δf dans le cas où c est une fréquence et k = Δt dans le cas où $c$ est un instant) afin d'évaluer les valeurs manquantes. Ainsi, on obtient une connaissance globale de toutes les valeurs d'un canal de transmission pour chacune des antennes, ce qui permet d'égaliser le signal en réception de manière classique.

Selon ce deuxième mode de réalisation, il est possible d'étendre cette technique d'estimation à des systèmes présentant un nombre supérieur à deux antennes d'émission.

Ainsi, si on considère le vecteur de symboles de référence $[x_1\ x_2 \dots x_n]$, la matrice de codage $M$ qui lui est associé par l'intermédiaire de la fonction de codage est :

$$M = \begin{bmatrix} x_1 & \cdots & x_n \\ \vdots & \ddots & \vdots \\ x_{N-n+1} & \cdots & x_N \end{bmatrix},$$

où $x_i$ est un symbole de référence, avec $i$ un entier relatif $1 \le i \le N$, et $N = n^2$.

Cette matrice est de rang plein, de sorte qu'on peut l'inverser au cours de l'estimation des différents canaux.

Comme décrit précédemment, les symboles de référence de la matrice de codage $M$ sont émis après répartition espace/fréquence sur l'ensemble des antennes d'émission, et le vecteur de référence reçu au niveau d'une antenne de réception, modifié par le canal de transmission, peut s'écrire sous la forme

$$\begin{bmatrix} r_1 \\ r_2 \\ r_3 \\ r_4 \end{bmatrix} = \begin{bmatrix} x_1 & x_2 & x_3 & x_4 \\ x_5 & x_6 & x_7 & x_8 \\ x_9 & x_{10} & x_{11} & x_{12} \\ x_{13} & x_{14} & x_{15} & x_{16} \end{bmatrix} \cdot \begin{bmatrix} h_1 \\ h_2 \\ h_3 \\ h_4 \end{bmatrix} + \begin{bmatrix} n_1 \\ n_2 \\ n_3 \\ n_4 \end{bmatrix}.$$

De nouveau, pour chacune des antennes de réception, on applique au vecteur de référence reçu une transformation mathématique par une matrice de décodage, correspondant à la matrice inverse intégrant une technique d'égalisation au sens du critère MMSE ou ZF de la matrice de codage *M*, pour estimer le canal de transmission *h*.

Si on utilise une technique d'égalisation au sens du critère MMSE, on obtient :

$$\begin{bmatrix} \hat{h}_1 \\ \hat{h}_2 \\ \hat{h}_3 \\ \hat{h}_4 \end{bmatrix} = \left[ M^H M + \frac{I}{\gamma} \right]^{-1} M^H \cdot \begin{bmatrix} h_1 \\ h_2 \\ h_3 \\ h_4 \end{bmatrix} + \left[ M^H M + \frac{I}{\gamma} \right]^{-1} M^H n,$$

avec $\gamma$ le rapport signal à bruit.

Comme décrit précédemment, on peut ensuite déterminer les coefficients manquants d'un canal de transmission en appliquant une interpolation temporelle ou fréquentielle (ou les deux) au niveau du récepteur, en utilisant une technique classique d'interpolation.

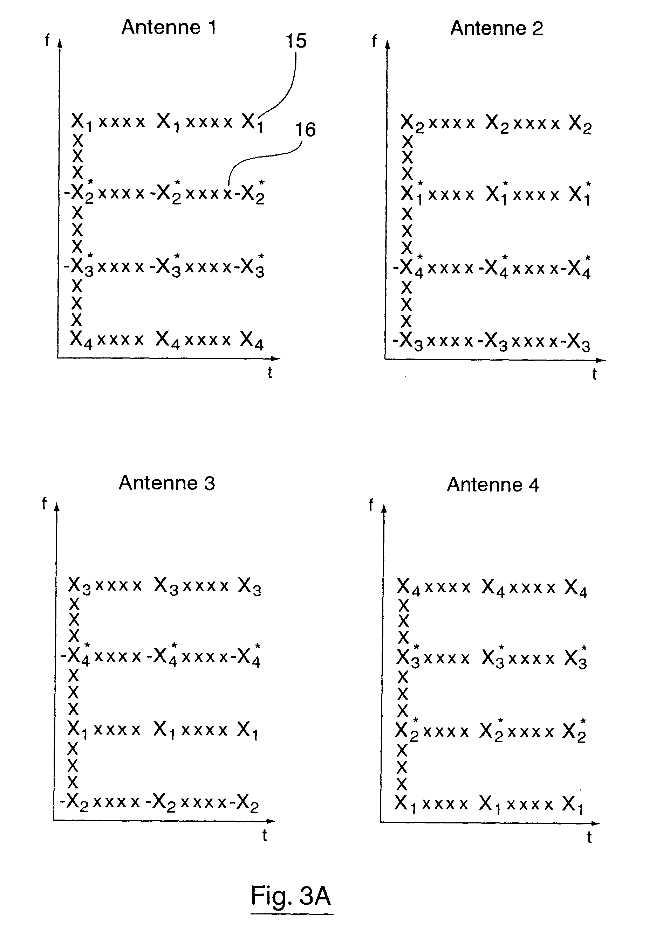

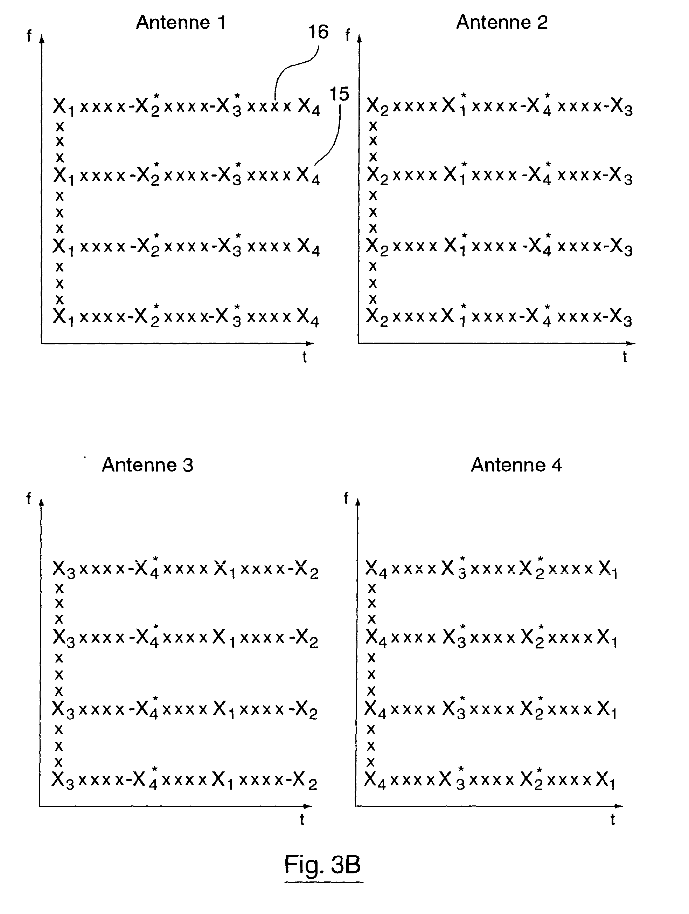

On présente désormais en relation avec les figures 3A et 3B un troisième mode de réalisation de l'invention, s'appliquant plus particulièrement aux systèmes multi-antennes de type MIMO.

Selon ce troisième mode de réalisation, un principe flexible est proposé permettant d'appliquer soit un codage spatio-temporel, soit un codage spatio-fréquentiel, en fonction des caractéristiques du canal de transmission.

Ainsi, la figure 3A illustre l'émission de 4 symboles de référence et de leurs conjugués espacés temporellement, dans un système multi-antennes à 4 antennes d'émission, avec $X_i$ un symbole de référence référencé 15, $X_i^*$ un symbole de référence conjugué (*i* un entier relatif et $1 \le i \le 4$), *x* un symbole de données, référencé 16.

La figure 3B illustre l'émission de 4 symboles de référence et de leurs conjugués espacés fréquentiellement, dans un système multi-antennes à 4 antennes d'émission.

Dans ce troisième mode de réalisation, les symboles de référence, une fois codés par l'intermédiaire de la matrice de codage *M*, sont répartis suivant l'axe temporel ou l'axe fréquentiel en fonction des propriétés du canal de propagation.

On peut ensuite commuter d'un codage spatio-temporel à un codage spatio-fréquentiel.

On rappelle que les valeurs choisies pour $\Delta f$ (espacement entre deux porteuses de référence) et $\Delta t$ (espacement entre deux symboles de référence à des instants connus) ne sont pas propres au système proposé mais dépendent respectivement de la bande et du temps de cohérence du canal de transmission.

En règle générale, la répartition dans le domaine temporel est plutôt appliquée dans le cas d'un canal variant temporellement, tandis que la répartition fréquentielle est davantage appliquée pour un canal variant fréquentiellement.

Ainsi, ayant une connaissance du canal à priori ou ayant calculé les valeurs de bande de cohérence et du temps de cohérence du canal, il est possible de commuter entre les deux structures d'insertion de symboles de référence décrites précédemment.

L'Homme du Métier étendra facilement l'enseignement de ces trois modes de réalisation à des systèmes présentant un nombre supérieur d'antennes, de même qu'à des systèmes présentant une répartition espace-temps et/ou espace-fréquence différente de celles proposées aux figures 1A, 1B, 2A, 2B, 3A et 3B.

Ainsi, selon l'invention, les différentes antennes d'émission émettent, sur une même porteuse et à un même instant, un signal caractérisé par un codage espace-temps et/ou espace-fréquence, ce qui limite la perte en efficacité spectrale.

Ce signal comprend donc, intrinsèquement, les caractéristiques de l'invention.

Finalement, un récepteur peut estimer chacun des canaux de transmission entre les différentes antennes d'émission et de réception à partir de ce codage spécifique et du traitement adéquat décrit précédemment. La technique particulière d'estimation de canal proposée selon l'invention peut d'ailleurs être appliquée au cas d'un système présentant deux antennes d'émission.

**Revendications**

1. Procédé d'émission d'un signal numérique à l'aide de $n$ antennes d'émission, $n$ étant strictement supérieur à 2, selon lequel on associe, à un vecteur de données source, $n$ vecteurs à émettre respectivement par chacune desdites antennes d'émission, à l'aide d'une matrice de codage $M$ de rendement égal à 1, mettant en oeuvre des symboles de référence, connus d'au moins un récepteur et permettant à ce dernier d'estimer au moins deux canaux de transmission correspondant respectivement à chacune desdites antennes d'émission, **caractérisé en ce que** lesdits symboles de référence subissent une transformation mathématique par ladite matrice de codage $M$ avant leur émission.

2. Procédé d'émission selon la revendication 1, **caractérisé en ce que** lesdits symboles de référence sont répartis en espace et en temps.

3. Procédé d'émission selon l'une quelconque des revendications 1 et 2, **caractérisé en ce que** lesdits symboles de référence sont répartis en espace et en fréquence.

4. Procédé d'émission selon l'une quelconque des revendications 1 à 3, **caractérisé en ce que** ladite matrice de codage comprend au moins deux blocs, chacun desdits blocs étant orthogonaux.

5. Procédé d'émission selon la revendication 4, **caractérisé en ce que** chacun desdits blocs de symboles de référence est émis séparément, chacun desdits blocs étant émis sur certaines desdites antennes d'émission, les autres antennes d'émission étant éteintes.

6. Procédé d'émission selon l'une quelconque des revendications 1 à 5, **caractérisé en ce qu'**il comprend une étape de sélection entre une répartition en fréquence et une répartition en temps.

7. Procédé d'émission selon la revendication 6, **caractérisé en ce que** ladite étape de sélection tient compte des caractéristiques d'un canal de transmission.

8. Procédé d'émission selon l'une quelconque des revendications 1 à 7, **caractérisé en ce** lesdits symboles de référence sont émis sur l'ensemble des antennes d'émission après transformation mathématique par ladite matrice de codage $M$.

9. Procédé d'émission selon la revendication 8, **caractérisé en ce que** ladite matrice de codage est une matrice obtenue par un codage de type Jafarkhani, et est de la forme :

$$M = \begin{bmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{bmatrix},$$

où $x_i$ est un symbole de référence et $x_i^*$ un symbole de référence conjugué, avec $i$ un entier relatif, $1 \leq i \leq 4$.

10. Signal numérique formé de $n$ vecteurs émis respectivement à l'aide *de n* antennes d'émission, $n$ étant strictement supérieur à 2,
    **caractérisé en ce que** ledit signal comprend des symboles de référence codés, obtenus après une transformation mathématique de symboles de référence par une matrice de codage $M$ de rendement égal à 1,
    de façon à permettre, dans un récepteur, d'estimer au moins deux canaux de transmission correspondant respectivement à chacune desdites antennes d'émission.

11. Procédé d'estimation d'au moins un canal de transmission dans un système multi-antennes mettant en oeuvre $n$ antennes d'émission, où $n$ est strictement supérieur à 2, et au moins une antenne de réception, selon lequel on associe, à un vecteur de données source, $n$ vecteurs à émettre respectivement par chacune desdites antennes d'émission, à l'aide d'une matrice de codage $M$, mettant en oeuvre des symboles de référence, connus d'au moins un récepteur et permettant à ce dernier d'estimer au moins deux canaux de transmission correspondant respectivement à chacune desdites antennes d'émission,

**caractérisé en ce qu'**il comprend une étape de réception d'un vecteur de référence reçu, correspondant à un vecteur de référence émis obtenu par la multiplication de symboles de référence par ladite matrice de codage *M*, et modifié par au moins un canal de transmission pour chacune desdites antennes d'émission,

et **en ce que**, pour chacune desdites antennes de réception, ledit vecteur de référence reçu subi une transformation mathématique par une matrice de décodage, inverse de ladite matrice de codage et tenant compte de l'effet d'un canal de transmission associé à ladite antenne de réception, pour fournir une estimation des effets desdits canaux de transmission sur lesdits symboles de référence.

**12.** Procédé d'estimation selon la revendication 11, **caractérisé en ce que** ladite matrice de décodage est une matrice inverse intégrant une égalisation au sens du critère MMSE ou ZF.

**13.** Procédé d'estimation selon la revendication 12, **caractérisé en ce que** ledit critère mis en oeuvre est le critère MMSE, et **en ce que** ladite matrice de décodage est formée des éléments :

$$\hat{h} = \frac{M^H}{M^H M + \dfrac{I}{\gamma}}\, r,$$

avec :

- *r* ledit vecteur de référence reçu ;
- *M* ladite matrice de codage ;
- *I* une matrice unité ;
- $\gamma$ le rapport signal à bruit ;
- *H* le transposé conjugué.

**14.** Procédé d'estimation selon la revendication 12, **caractérisé en ce que** ledit critère mis en oeuvre est le critère ZF, et **en ce que** ladite matrice de décodage est formée des éléments :

$$\hat{h} = \frac{M^H}{M^H M}\, r,$$

avec :

- *r* ledit vecteur de référence reçu ;
- *M* ladite matrice de codage ;
- *H* le transposé conjugué.

**15.** Procédé d'estimation selon l'une quelconque des revendications 11 à 14, **caractérisé en ce qu'**il comprend une étape d'interpolation, délivrant une estimation desdits canaux de transmission pour chacune des données utiles, à partir de l'estimation desdits symboles de référence.

**16.** Procédé d'estimation selon la revendication 15, **caractérisé en ce que** ladite étape d'interpolation met en oeuvre une interpolation temporelle et/ou une interpolation fréquentielle.

**17.** Procédé d'estimation selon l'une quelconque des revendications 15 et 16, **caractérisé en ce que** ladite étape d'interpolation appartient au groupe comprenant :

- les interpolations linéaires ;
- les interpolations de Wiener.

## Antenne 1

$f$

$\Delta f2$  $\Delta f1$  $\Delta F$

$-X_2^* \times \times \times \times -X_2^* \times \times \times \times -X_2^*$
$\times \quad - - - - \quad \times \qquad \times$
$\times \quad - - - - \quad \times \qquad \times$
$X_1 \times \times \times \times \quad X_1 \times \times \times \times \quad X_1$
$\times \qquad \times \qquad \times$
$\times \qquad \times \qquad \times$
$\times \qquad \times \qquad \times$
$0 \quad \times \times \times \times \quad 0 \quad \times \times \times \times \quad 0$
$\times \qquad \times \qquad \times$
$\times \qquad \times \qquad \times$
$0 \quad \times \times \times \times \quad 0 \quad \times \times \times \times \quad 0$
$\times \qquad \times \qquad \times$
$\times \qquad \times \qquad \times$
$-X_2^* \times \times \times \times -X_2^* \times \times \times \times -X_2^*$

15

16

$\Delta t$

$t$

11

## Antenne 2

$f$

$\Delta f1$  $\Delta f2$  $\Delta F$

$X_1^* \times \times \times \times \quad X_1^* \times \times \times \times \quad X_1^*$
$\times \qquad \times \qquad \times$
$\times \qquad \times \qquad \times$
$X_2 \times \times \times \times \quad X_2 \times \times \times \times \quad X_2$
$\times \qquad \times \qquad \times$
$\times \qquad \times \qquad \times$
$0 \quad \times \times \times \times \quad 0 \quad \times \times \times \times \quad 0$
$\times \qquad \times \qquad \times$
$\times \qquad \times \qquad \times$
$0 \quad \times \times \times \times \quad 0 \quad \times \times \times \times \quad 0$
$\times \qquad \times \qquad \times$
$\times \qquad \times \qquad \times$
$\times \qquad \times \qquad \times$
$X_1^* \times \times \times \times \quad X_1^* \times \times \times \times \quad X_1^*$

$t$

12

## Antenne 3

$f$

$\Delta f2$  $\Delta f1$  $\Delta F$

$0 \quad \times \times \times \times \quad 0 \quad \times \times \times \times \quad 0$
$\times \qquad \times \qquad \times$
$\times \qquad \times \qquad \times$
$0 \quad \times \times \times \times \quad 0 \quad \times \times \times \times \quad 0$
$\times \qquad \times \qquad \times$
$\times \qquad \times \qquad \times$
$-X_4^* \times \times \times \times -X_4^* \times \times \times \times -X_4^*$
$\times \qquad \times \qquad \times$
$X_3 \times \times \times \times \quad X_3 \times \times \times \times \quad X_3$
$\times \qquad \times \qquad \times$
$\times \qquad \times \qquad \times$
$\times \qquad \times \qquad \times$
$0 \quad \times \times \times \times \quad 0 \quad \times \times \times \times \quad 0$

$t$

13

## Antenne 4

$f$

$\Delta f1$  $\Delta f2$  $\Delta F$

$0 \quad \times \times \times \times \quad 0 \quad \times \times \times \times \quad 0$
$\times \qquad \times \qquad \times$
$\times \qquad \times \qquad \times$
$0 \quad \times \times \times \times \quad 0 \quad \times \times \times \times \quad 0$
$\times \qquad \times \qquad \times$
$\times \qquad \times \qquad \times$
$X_3^* \times \times \times \times \quad X_3^* \times \times \times \times \quad X_3^*$
$\times \qquad \times \qquad \times$
$X_4 \times \times \times \times \quad X_4 \times \times \times \times \quad X_4$
$\times \qquad \times \qquad \times$
$\times \qquad \times \qquad \times$
$\times \qquad \times \qquad \times$
$0 \quad \times \times \times \times \quad 0 \quad \times \times \times \times \quad 0$

$t$

14

## Fig. 1A

Antenne 1

$-X_2^*$ xxxx $-X_2^*$ xxxx $-X_2^*$   15
x      - - - -   x        x
x      - - - -   x        x
$X_1$ xxxx $X_1$ xxxx $X_1$   16
x              x        x
x              x        x
x              x        x
0  xxxx 0  xxxx 0
x              x        x
x              x        x
0  xxxx 0  xxxx 0
x              x        x
x              x        x
x              x        x
$-X_2^*$ xxxx $-X_2^*$ xxxx $-X_2^*$

$\Delta t1$  $\Delta t2$  $\Delta T$  $\Delta f$

11

Antenne 2

$X_1^*$ xxxx $X_1^*$ xxxx $X_1^*$
x              x        x
x              x        x
$X_2$ xxxx $X_2$ xxxx $X_2$
x              x        x
x              x        x
x              x        x
0  xxxx 0  xxxx 0
x              x        x
x              x        x
0  xxxx 0  xxxx 0
x              x        x
x              x        x
x              x        x
$X_1^*$ xxxx $X_1^*$ xxxx $X_1^*$

$\Delta t1$  $\Delta t2$  $\Delta T$

12

Antenne 3

0  xxxx 0  xxxx 0
x              x        x
x              x        x
0  xxxx 0  xxxx 0
x              x        x
x              x        x
x              x        x
$-X_4^*$ xxxx $-X_4^*$ xxxx $-X_4^*$
x              x        x
x              x        x
$X_3$ xxxx $X_3$ xxxx $X_3$
x              x        x
x              x        x
x              x        x
0  xxxx 0  xxxx 0

$\Delta t1$  $\Delta t2$  $\Delta T$

13

Antenne 4

0  xxxx 0  xxxx 0
x              x        x
x              x        x
0  xxxx 0  xxxx 0
x              x        x
x              x        x
x              x        x
$X_3^*$ xxxx $X_3^*$ xxxx $X_3^*$
x              x        x
x              x        x
$X_4$ xxxx $X_4$ xxxx $X_4$
x              x        x
x              x        x
x              x        x
0  xxxx 0  xxxx 0

$\Delta t1$  $\Delta t2$  $\Delta T$

14

Fig. 1B

## Antenne 1

$f$

$-X_2^* \times\times\times\times -X_2^* \times\times\times\times -X_2^*$    15
0         0         0
X
X
$X_1 \times\times\times\times X_1 \times\times\times\times X_1$
0         0         0    16
X
X
$-X_2^* \times\times\times\times -X_2^* \times\times\times -X_2^*$
0         0         0
X
X
$X_1 \times\times\times\times X_1 \times\times\times\times X_1$
0         0         0

$\Delta f1$, $\Delta F$, $\Delta f2$

$k+\Delta f1$, $k+\Delta f1-1$, $k$

p   p+1   p+$\Delta t$   t

$\Delta t$

11

## Antenne 2

$f$

$X_1^* \times\times\times\times X_1^* \times\times\times\times X_1^*$
0         0         0
X
X
$X_2 \times\times\times X_2 \times\times\times\times X_2$
0         0         0
X
X
$X_1^* \times\times\times\times X_1^* \times\times\times\times X_1^*$
0         0         0
X
X
$X_2 \times\times\times X_2 \times\times\times\times X_2$
0         0         0

$\Delta F$

t

12

## Antenne 3

$f$

0  $\times\times\times\times$ 0  $\times\times\times\times$ 0
$-X_2^* \times\times\times\times -X_2^* \times\times\times\times -X_2^*$
X
X
0  $\times\times\times\times$ 0  $\times\times\times\times$ 0
$X_1 \times\times\times\times X_1 \times\times\times\times X_1$
X
X
0  $\times\times\times\times$ 0  $\times\times\times\times$ 0
$-X_2^* \times\times\times\times -X_2^* \times\times\times\times -X_2^*$
X
X
0  $\times\times\times\times$ 0  $\times\times\times\times$ 0
$X_1 \times\times\times\times X_1 \times\times\times\times X_1$

$\Delta F$

t

13

## Antenne 4

$f$

0  $\times\times\times\times$ 0  $\times\times\times\times$ 0
$X_1^* \times\times\times\times X_1^* \times\times\times\times X_1^*$
X
X
0        0        0
$X_2 \times\times\times\times X_2 \times\times\times\times X_2$
X
X
0  $\times\times\times\times$ 0  $\times\times\times\times$ 0
$X_1^* \times\times\times\times X_1^* \times\times\times\times X_1^*$
X
X
0        0        0
$X_2 \times\times\times\times X_2 \times\times\times\times X_2$

$\Delta F$

t

14

## Fig. 2A

Antenne 1

t

$-X_2^*$ x x x x $-X_2^*$ x x x x $-X_2^*$    15
0            0            0
X
X
$X_1$ x x x x  $X_1$ x x x x  $X_1$    16
0            0            0
X
X
$-X_2^*$ x x x x $-X_2^*$ x x x x $-X_2^*$
0            0            0
X
X
$X_1$ x x x x  $X_1$ x x x x  $X_1$
0            0            0

$\Delta t1$

$\Delta t2$

$\Delta T$

f

$\Delta f$

11

Antenne 2

t

$X_1^*$ x x x x $X_1^*$ x x x x $X_1^*$
0            0            0
X
X
$X_2$ x x x x  $X_2$ x x x x  $X_2$
0            0            0
X
X
$X_1^*$ x x x x $X_1^*$ x x x x $X_1^*$
0            0            0
X
X
$X_2$ x x x x  $X_2$ x x x x  $X_2$
0            0            0

$\Delta T$

f

12

Antenne 3

t

0  x x x x 0  x x x x 0
$-X_2^*$ x x x x $-X_2^*$ x x x x $-X_2^*$
X
X
0  x x x x 0  x x x x 0
$X_1$ x x x x  $X_1$ x x x x  $X_1$
X
X
0  x x x x 0  x x x x 0
$-X_2^*$ x x x x $-X_2^*$ x x x x $-X_2^*$
X
X
0  x x x x 0  x x x x 0
$X_1$ x x x x  $X_1$ x x x x  $X_1$

$\Delta T$

f

13

Antenne 4

t

0  x x x x 0  x x x x 0
$X_1^*$ x x x x $X_1^*$ x x x x $X_1^*$
X
X
0            0            0
$X_2$ x x x x  $X_2$ x x x x  $X_2$
X
X
0  x x x x 0  x x x x 0
$X_1^*$ x x x x $X_1^*$ x x x x $X_1^*$
X
X
0            0            0
$X_2$ x x x x  $X_2$ x x x x  $X_2$

$\Delta T$

f

14

Fig. 2B

Fig. 3A

Antenne 1

$f$    16   $f$

15

$X_1$ x x x x $-X_2^*$ x x x x $-X_3^*$ x x x x $X_4$
x
x
x
$X_1$ x x x x $-X_2^*$ x x x x $-X_3^*$ x x x x $X_4$
x
x
x
$X_1$ x x x x $-X_2^*$ x x x x $-X_3^*$ x x x x $X_4$
x
x
x
$X_1$ x x x x $-X_2^*$ x x x x $-X_3^*$ x x x x $X_4$

$t$

Antenne 2

$f$

$X_2$ x x x x $X_1^*$ x x x x $-X_4^*$ x x x x $-X_3$
x
x
x
$X_2$ x x x x $X_1^*$ x x x x $-X_4^*$ x x x x $-X_3$
x
x
x
$X_2$ x x x x $X_1^*$ x x x x $-X_4^*$ x x x x $-X_3$
x
x
x
$X_2$ x x x x $X_1^*$ x x x x $-X_4^*$ x x x x $-X_3$

$t$

Antenne 3

$f$

$X_3$ x x x x $-X_4^*$ x x x x $X_1$ x x x x $-X_2$
x
x
x
$X_3$ x x x x $-X_4^*$ x x x x $X_1$ x x x x $-X_2$
x
x
x
$X_3$ x x x x $-X_4^*$ x x x x $X_1$ x x x x $-X_2$
x
x
x
$X_3$ x x x x $-X_4^*$ x x x x $X_1$ x x x x $-X_2$

$t$

Antenne 4

$f$

$X_4$ x x x x $X_3^*$ x x x x $X_2^*$ x x x x $X_1$
x
x
x
$X_4$ x x x x $X_3^*$ x x x x $X_2^*$ x x x x $X_1$
x
x
x
$X_4$ x x x x $X_3^*$ x x x x $X_2^*$ x x x x $X_1$
x
x
x
$X_4$ x x x x $X_3^*$ x x x x $X_2^*$ x x x x $X_1$

$t$

Fig. 3B

**Office européen des brevets**

**RAPPORT DE RECHERCHE EUROPEENNE**

Numéro de la demande

EP 04 36 4035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | CHAU YUEN ET AL: "Decoding of quasi-orthogonal space-time block code with noise whitening" 14TH IEEE 2003 INTERNATIONAL SYMPOSIUM ON PERSONAL, INDOOR AND MOBILE RADIO COMMUNICATION PROCEEDINGS, vol. 2, 7 septembre 2003 (2003-09-07), pages 2166-2170, XP010677944 * abrégé * * page 2166 - page 2168, colonne de gauche * ----- | 1-17 | H04L1/06 H04L25/02 |
| A | TIRKKONEN O ET AL: "Minimal non-orthogonality rate 1 space-time block code for 3+ Tx antennas" IEEE 6TH SYMPOSIUM ON SPREAD-SPECTRUM TECHNIQUES AND APPLICATIONS, vol. 2, 6 septembre 2000 (2000-09-06), pages 429-432, XP010516615 * abrégé * * page 429 - page 431, colonne de gauche, alinéa V * ----- | 1-17 | |
| D,A | JAFARKHANI H: "A quasi-orthogonal space-time block code" 2000 IEEE, vol. 1, 23 septembre 2000 (2000-09-23), pages 42-45, XP010532464 * page 43, colonne de droite, alinéa III * ----- -/-- | 1-17 | DOMAINES TECHNIQUES RECHERCHES (Int.Cl.7) H04L H04B |

Le présent rapport a été établi pour toutes les revendications

| Lieu de la recherche | Date d'achèvement de la recherche | Examinateur |
|---|---|---|
| Munich | 20 septembre 2004 | Marzenke, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 04 36 4035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | NAGUIB A F ET AL: "Space-time coded modulation for high data rate wireless communications" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 novembre 1997 (1997-11-03), pages 102-109, XP010254629 ISBN: 0-7803-4198-8 * abrégé * * page 102 * * page 105, colonne de droite - page 107, colonne de gauche * * figures 4,6,7 * ----- | 1-17 | |
| A | US 6 307 882 B1 (MARZETTA THOMAS L) 23 octobre 2001 (2001-10-23) * colonne 1, ligne 34 - colonne 1, ligne 47 * * colonne 3, ligne 3 - colonne 4, ligne 65 * * figures 1,2 * ----- | 1-17 | **DOMAINES TECHNIQUES RECHERCHES (Int.Cl.7)** |
| A | HOTTINEN A ET AL: "A ROANDOMIZATION TECHNIQUE FOR NON-ORTHOGONAL SPACE-TIME BLOCK CODES" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY : IEEE, US, vol. VOL. 2 OF 4. CONF. 53, 6 mai 2001 (2001-05-06), pages 1479-1482, XP001067210 ISBN: 0-7803-6728-6 * page 1479, colonne de droite - page 1480, colonne de droite * ----- | 1-17 | |

Le présent rapport a été établi pour toutes les revendications

| Lieu de la recherche | Date d'achèvement de la recherche | Examinateur |
|---|---|---|
| Munich | 20 septembre 2004 | Marzenke, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 36 4035

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-09-2004

| Document brevet cité au rapport de recherche | Date de publication | Membre(s) de la famille de brevet(s) | Date de publication |
|---|---|---|---|
| US 6307882 B1 | 23-10-2001 | AUCUN | |

EPO FORM P0460

Pour tout renseignement concernant cette annexe : voir Journal Officiel de l'Office européen des brevets, No.12/82